# EUROPEAN PATENT APPLICATION

(11) **EP 3 718 726 A1**
(43) Date of publication of application: **07.10.2020**
(21) Application number: 20177422.1
(22) Date of filing: 29.05.2020
(51) Int. Cl.: B29B 13/02, B29C 53/04, B44C 1/00, B44C 1/20, B44C 3/08

(54) **METHOD FOR REALIZING A DECORATIVE ELEMENT, PARTICULAR A LAMP**

(30) Priority: 05.04.2019 IT 201900005158
(71) Applicant: Slamp S.p.A., 00071 Pomezia(RM) (IT)
(72) Inventor: SADLER, Marc, 00071 Pomezia (RM) (IT)
(74) Representative: Mulas, Chiara

(57) **Abstract**

This invention relates to a method for realizing a decorative element, in particular a lamp.
According to the invention, the method for realizing a decorative element, in particular a lamp, is characterized by the fact that it comprises the following steps:
a) arranging at least one plastic material surface and a heat source emanating high temperature heat;
b) arranging said plastic material close to said heat source, preferably starting from a first end so as to make it completely sliding close to said heat source;
c) maintaining the area being worked above said heat source up to reaching the softening point;
d) manually working said softened material while sliding the rest of said surface above said heat source;
e) proceeding with said sliding and said working until said entire desired surface has been processed;
f) cooling the shape obtained in order to stabilize it.

## Description

This invention refers to a method for realizing a decorative element, in particular a lamp.

As is well known, there is an ever-increasing growth in the decoration and design lighting sector, so decorative elements and lamps are increasingly attractive from an aesthetic point of view, and more and more innovative solutions are being sought to achieve these results in a productively cost-effective manner.

In addition, it is also well known that it is increasingly difficult to satisfy the wishes/tastes of customers or architects/decorators by being able to offer designs that fit harmoniously with the environment in which they are located.

The designs of the lamps and decorative elements are however, closely linked to the methods used to realize them; it is clear that the same methods used for different products tend to give similar results.

Therefore, in order to obtain new and innovative design solutions, it is important to have new methods for realizing them.

These methods for realizing decorative elements of a known type are not free of drawbacks, among which it should be noted that they generally involve the use of complex technologies and machinery, which means that in addition to being constrained by the type of machinery used, the results obtained often do not allow the designer to obtain the desired results, if not at a very high cost.

Another drawback of these methods for realizing decorative elements of a known type is that they tend towards the homogenization of the products obtained, so you have products that, despite the aesthetic value you would like to give them, have an industrial and not very artisanal appearance.

Furthermore, one drawback of the methods currently used to realize artisanal decorative elements is that they are often slow and complicated in order to obtain elaborate results.

Another drawback of such methods for realizing decorative elements of a known type is that the products obtained are often fragile, so that the solution proposed according to the invention must make it possible not only to obtain design elements with an artisanal appearance but which are both robust and resistant to transport.

The main aim of this invention is to provide a method which overcomes the above-mentioned drawbacks by allowing decorative elements to be realized, in particular lamps, with innovative designs and which are at the same time robust.

Within the context of this task, one aim of the method according to the invention is to realize decorative elements that have an artisanal appearance, but which can be easily reproduced in large numbers, and have special aesthetic features.

Another aim of the method according to the invention is to allow decorative elements to be realized easily and quickly, despite the fact that it is essentially an artisanal method, and thus to produce "hand-made" products, which gives added value to the object.

A further aim of the method according to the invention is to realize decorative elements that are able to give the broadest assurances in terms of reliability and safety when being used.

Another aim of the method according to the invention is to realize decorative elements in an easy and economically competitive way when compared to the background art.

The above-described task, as well as the aims mentioned and others that will appear later, are achieved by a method for realizing a decorative element, in particular a lamp, comprising the following steps:
a) arranging at least one plastic material surface and a heat source emanating high temperature heat;
b) arranging such plastic material close to this heat source, preferably starting from a first end so as to make the entire surface sliding close to the heat source;
c) maintaining the area being worked above the heat source up to reaching the softening point;
d) manually working the softened material while sliding the rest of the surface above the heat source;
e) sliding and working until the entire desired surface has been processed;
f) cooling the shape obtained in order to stabilize it.

The working step can also be a manual "pleating" step of the softened material.

The plastic material surface used can be of any shape according to the desired final shape.

The plastic material preferably belongs to the PET (polyethylene terephthalate) family, in particular PETG (PET+ glycol) and A-PET (Amorphous PET).

The heat source is preferably a special workbench equipped with a flat hot air jet grill.

Additionally, such surface cooling step takes place at room temperature.

The method according to the invention also requires the use by the operator of appropriate forms of protection such as for example, gloves and glasses.

In addition, step (b) may be preceded, if necessary, by a step of inserting coupling means on the material, preferably polycarbonate hooks.

Preferably, the working temperature varies depending on the thickness processed; preferably it is between about 110 and 140 degrees.

Additionally, the average working time in the softening and transformation step varies according to the thickness processed; preferably it is about 3 to 4 minutes.

The method may include a final step of attaching the module obtained to additional components (structural, hanging, lighting, etc.) depending on the desired decorative element.

Finally, such method according to the invention can be applied on several plastic material surfaces at the same time.

Further features and advantages will be more apparent from the description of a preferred, but not exclusive, embodiment of a method for realizing a decorative element.

The method for realizing decorative elements, in particular lamps, comprises the following steps:
a) arranging at least one plastic material surface and a heat source emanating high temperature heat;
b) arranging the plastic material close to the heat source, preferably starting from a first end so as to make the entire surface sliding close to such heat source;
c) maintaining the area being worked above the heat source up to reaching the softening point;
d) manually working said softened material while sliding the rest of said surface above said heat source;
e) sliding and working until the entire desired surface has been processed;
f) cooling the shape obtained in order to stabilize it.

The working step can possibly be replaced by a manual "pleating" step, or similar, of such softened material in the event a pleated decorative element is to be obtained.

The surface used can be of any shape according to the desired final shape. For example, if you want to obtain a cylinder, a rectangular surface must be worked.

In fact, it is possible to obtain objects with different shapes (cylindrical, conical, etc.) with the same steps of such method.

In addition, the plastic materials identified for this type of working are preferably of the PET (polyethylene terephthalate) family, in particular PETG (PET+glycol) and A-PET (Amorphous PET).

Preferably, the heat source is a special workbench equipped with a flat hot air jet grill.

The surface cooling step takes place at room temperature, after the passage above the hot air jet. The cooling time is basically 5 seconds, but it depends on the thickness and the type of material used. Alternatively, cooling means can be used to speed up the process.

In addition, such method requires the use of appropriate forms of protection for example, such as gloves and glasses.

Step b) of arranging the plastic material near the heat source can be preceded by a step of inserting coupling means, such as polycarbonate hooks, on the material so that the module obtained can be closed on itself or coupled to other modules obtained in the same way, or with any hanging means so that it can be hung.

Preferably, the temperature range for proper working is about 110 to 140 degrees.

Obviously, the temperature, as the time spent above the hot jet, vary according to the thickness worked.

The average working time in the softening and transformation step is 3 to 4 minutes for the object in question.

The module can be further attached to additional structures that may include a light source, steel cables for hanging or anything else depending on the desired decorative element.

Alternatively, again depending on the desired effect, several plastic material surfaces can be worked at the same time.

An example embodiment of the method for realizing a lamp is illustrated below for illustrative purposes only.

The lamp includes two concentric rings, an external one and an internal one, respectively made of 0.7mm thick A_PET material, with lenticular-effect calender finishing and diameter of about 57 cm, and made of 0.5mm thick PETG material with "PWD" surface treatment deposition in metal film by evaporation, and diameter of about 39 cm.

For the desired aesthetic effect, the flat sheets are cut into rectangular modules with two different heights of 20 cm for the outer ring and 10 cm for the inner ring.

Initially, both modules are riveted on both ends of the polycarbonate hooks.

Both surfaces are worked according to the invention method. In particular, due to the features of the sheets used, the working temperature is about 120°C and the cooling time is about 5 seconds.

Then thanks to the hooks, each module is closed on itself to form a cylinder.

Finally, the cylinders are attached to a PMMA (methacrylate) structure to which the light source and steel cables for hanging are also attached.

The operation of the method for realizing a decorative element is clear and evident from what is described.

In practice, it has been established that the method according to this invention makes it possible to achieve the intended aims in that it allows decorative elements, in particular lamps, to be realized which have a new appearance as compared to the known objects.

Another advantage of the method for realizing decorative elements according to the invention is that it is easy to implement by any user and requires no special training.

A further advantage of the method according to the invention is that it does not require any particular machinery or equipment, apart from a heat source.

Another advantage of the method according to the invention is that it creates elements of any shape and appearance.

The method for realizing decorative elements thus conceived is susceptible to several modifications and variants all falling within the scope of the inventive concept.

Further, all the details can be replaced by other technically-equivalent elements.

In practice, any materials may be used, as long as they are compatible with the specific use, and also any sizes and contingent shapes may be used, according to the needs.

This invention is described by way of example only, without limiting the scope of application, according to its preferred embodiments, but it shall be understood that the invention may be modified and/or adapted by an expert in the field without thereby departing from the scope of the inventive concept, as defined in the claims herein.

## Claims

1. Method for realizing a decorative element, in particular a lamp, **characterized by** the fact that it comprises the following steps:
a) arranging at least one plastic material surface and a heat source emanating high temperature heat;
b) arranging said plastic material close to said heat source, preferably starting from a first end so as to make it completely sliding close to said heat source;
c) maintaining the area being worked above said heat source up to reaching the softening point;
d) manually working said softened material while sliding the rest of said surface above said heat source;
e) proceeding with said sliding and said working until said entire desired surface has been processed;
f) cooling the shape obtained in order to stabilize it.

2. Method for realizing a decorative element, in particular a lamp, according to claim 1, **characterized in that** said working step is a manual "pleating" step, or similar, of said softened material.

3. Method for realizing a decorative element, in particular a lamp, according to claims 1 and 2, **characterized in that** said plastic material surface can be of any shape according to the desired final shape.

4. Method for realizing a decorative element, in particular a lamp, according to one of the preceding claims, **characterized in that** said plastic material belongs to the PET (polyethylene terephthalate) family, in particular PETG (PET+glycol) and A-PET (Amorphous PET).

5. Method for realizing a decorative element, in particular a lamp, according to one of the preceding claims, **characterized in that** said heat source is a special workbench equipped with a flat hot air jet grill.

6. Method for realizing a decorative element, in particular a lamp, according to one of the preceding claims, **characterized in that** said cooling step of the surface takes place at room temperature.

7. Method for realizing a decorative element, in particular a lamp, according to one of the preceding claims, **characterized in that** it requires the use of appropriate forms of protection such as for example, gloves and glasses.

8. Method for realizing a decorative element, in particular a lamp, according to one of the preceding claims, **characterized in that** said step b) is preceded by a step of inserting coupling means on the material.

9. Method for realizing a decorative element, in particular a lamp, according to claim 8, **characterized in that** said coupling means are polycarbonate hooks.

10. Method for realizing a decorative element, in particular a lamp, according to one of the preceding claims, **characterized in that** the processing temperature varies depending on the thickness worked; preferably it is between about 110 and 140 degrees.

11. Method for realizing a decorative element, in particular a lamp, according to one of the preceding claims, **characterized in that** the average working time in the softening and transformation step varies depending on the thickness processed; preferably it is about 3 to 4 minutes.

12. Method for realizing a decorative element, in particular a lamp, according to one of the preceding claims, **characterized in that** it includes a final step of attaching said module obtained on the further components (structural, hanging, lighting, etc.) according to the desired decorative element.

13. Method for realizing a decorative element, in particular a lamp, according to one of the preceding claims, **characterized in that** it is possible to work several surfaces of plastic material at the same time.
